# EUROPEAN PATENT APPLICATION

(11) **EP 2 798 930 A2**
(43) Date of publication of application: **05.11.2014**
(21) Application number: 14166701.4
(22) Date of filing: 30.04.2014
(51) Int. Cl.: A01C 21/00, A01B 79/02

(54) **System for controlling a mineral fertilizer spreader with a tablet computer**

(30) Priority: 01.05.2013 DK 201370244
(71) Applicant: Bogballe A/S, 7171 Uldum (DK)
(72) Inventor: Laursen, Nils Jørn, 8722 Hedensted (DK)
(74) Representative: Tellefsen, Jens J.

(57) **Abstract**

The present invention relates to a system for controlling the operation of an agricultural implement (1) using a tablet computer (14), where the interaction with the implement is done via one or more graphic user interface on the tablet computer. The tablet computer is coupled to a communications module (4) which in turn is coupled to an electronic terminal (2) which controls the operation of the implement. The communications module (4) manages the transmitted data between the tablet computer and the electronic terminal and the positioning units or sensor units coupled to the system. This significantly reduces the costs for the farmer as the operation of the implement and any applications associated with the implement is managed by the tablet computer. The tablet computer allows the farmer to plan and document the work by using the tablet computer, and to use it for other purposes, such as navigation, emails or the like.

## Description

### Field of the Invention

The present invention relates to a system for controlling the operation of an agricultural implement, such as a mineral fertilizer spreader comprising:
- an agricultural implement comprising mechanical coupling means for coupling to a drive unit, such as a tractor, a container for receiving and storing a substance for treatment of an area, and means for distributing the substance on to the area when the agricultural implement is activated;
- an electronic terminal configured to be electronically coupled to the implement, wherein the electronic terminal is configured to control the operation of the implement.

### Background of the Invention

During the recent years the environment requirements for spreading fertilizers or other minerals on agricultural fields have increased, as well as the required documentation associated with spreading fertilizers or other minerals. The same amount of environment requirements applies for spraying the agricultural fields with pesticides or other liquid based chemicals.

Today, agricultural implements such as mineral fertilizer spreaders might be equipped with a terminal, such as the Calibrator Zurf model from the applicant, for controlling the amount of minerals delivered to the field. Such implements are disclosed in EP 1208733 A and EP 0880877 A1. Such a terminal is often coupled to a second GPS assisted terminal for specific applications, such as headland management, section control, and variable rate control. The spreader may instead be equipped with an ISOBUS controller which is electronically coupled to the GPS assisted virtual terminal located in the tractor.

Such a GPS assisted virtual terminal is often custom made for a particular application and typically only comprises the electrical components necessary for that application. The cost for such a terminal is often very high, since it is custom made. Such terminals often have to be electrically coupled to a GPS receiver in order to track the position of the spreader or sprayer. The farmer typically has to use a mobile phone when he wants to communicate with another person or navigate between fields or to the farm. This increases the costs for the farmer and increases the number of devices located in the cabin of the tractor which may lead to confusion and errors during operation.

A solution for managing a fleet of slurry spreaders is disclosed by Kotte Landtechnik GmbH where an iPad located in each vehicle is used by the operator to navigate between jobs and communicate with the farm. Operational data of the slurry spreader is shown on a graphic user interface on the iPad, but the operator controls the slurry spreader by using a joystick and a terminal coupled to the slurry spreader. The operator is not able to control specific applications using the iPad, such as section control, the operator has to couple a custom made terminal to the network which increases the costs for the operator.

EP 0814397 B1 discloses a portable computer for controlling a round baler. The portable computer is placed in a docking station in the cabin. The computer displays operational data of the round baler where a number of buttons on the side of the display is used to control the round baler. This solution discloses a custom made computer increasing the cost of the terminal. The terminal is not configured to manage a specific application which means that the farmer needs to couple another terminal to the portable computer.

DE 20221564 U1 discloses the use of a mobile phone for controlling an agricultural implement via a Bluetooth connection or a CAN BUS connection. Operational data of the implement is displayed on the mobile phone where the buttons on the mobile phone are used to control the implement. The operator is only able to control the operation of the implement using the mobile phone. The implement still needs to be coupled to a GPS assisted terminal for applications such as headland management.

US 2012/0169504 A1 discloses a spraying system wherein the planning is done on one computer and then uploaded to another portable computer, such as a tablet computer, which provides instructions for completing the spraying. Any updates to the created spread chart are transmitted to the portable computer via the first computer. An onboard terminal in the form of a system controller is used to control the spraying. In this solution, the portable computer is only used to guide the operator during the spraying application while the control of the sprayer is done via the onboard terminal. Secondly, planning is done on a separate computer which introduces additional steps to completing the spraying procedure.

### Object of the Invention

An object of the invention is to provide a simple and cheap solution for controlling a mineral fertilizer spreader by using a tablet computer.

An object of the invention is to provide a tablet computer for operating, acting as user interface and controlling different applications such as headland management, section control and variable rate control of a mineral fertilizer spreader.

### Description of the Invention

An object of the invention is achieved by a system for controlling the operation of an agricultural implement, characterised in that:
- an executable program is configured to be loaded onto a tablet computer, e.g. an off-the-shelf tablet computer, which is configured to execute the program, where the tablet computer is configured to be electronically coupled to a communications module via a first connection, which communications module in turn is configured to be electrically coupled to the electronic terminal via a second connection,
- wherein the operation of the implement is controlled via at least one graphic user interface of the program, wherein the graphic user interface is configured to run on the tablet computer.

This allows the farmer or operator to control the operation of an agricultural implement using the functionality of a conventional off-the-shelf tablet computer, such as from HTC, Apple, Samsung or the like. The tablet computer is defined as a single-piece computer having a single or two back-to-back touch-sensitive screens, not to be confused with a notebook having a first piece dedicated as a screen and a second piece dedicated as a keyboard. The program may be downloaded directly from a remote server or via a computer readable storage medium and is configured to run on the platform, e.g. iOS, Android or Windows, of the tablet computer. This provides a simple and cheap solution for the operator or the farmer since he does not need to purchase a custom made terminal but simply has to install the program on his own tablet computer. This further allows the operator to remove the tablet computer from the cabin and use it as a conventional computer for other purposes. It further allows the farmer to store and manage field information in a standardised format and environment.

The program comprises a first graphic user interface, GUI, configured to display one or more operational data of the implement and to allow the operator to interact with the implement using one or more predefined touch-sensitive areas on the GUI. The areas are used to input and/or alter data which is then used to control the implement. This allows the operator to monitor and control the operation of the implement without the need for multiple rows of buttons along the periphery of the terminal. This allows the screen size to be increased and allows the operator to better view the data displayed on the screen. The GUIs may be updated and adapted according to the colours and resolution of the screen, either manually or automatically, allowing the operator to better view the data on the screen in different lightings.

The tablet computer may be removable placed in a bracket or a docking station mounted in the cabin of the tractor. The tablet computer may be powered by the battery of the tractor, e.g. via a power cable configured to be coupled to a power supply unit in the tablet computer. The docking station may comprise one or more electrical terminals for coupling the communications module to the tablet computer. The motor of the tractor may instead be coupled to a power supply unit in the communications module which may be configured to power the tablet computer via a wired connection. A protective film or casing may be mounted, e.g. removable, to the outer surface of the tablet computer which protects the tablet computer from the environmental impacts found in the cabin, e.g. vibrations and dusts.

According to one embodiment, the program comprises at least another graphic user interface for managing a predetermined application, such as headland management, section control, and/or variable rate control, when operating the implement.

The program preferably comprises a second GUI for headland management allowing the operator to optimise/manage the spreading or spraying on headlands of an agricultural field. The second GUI may be configured to graphically display the field and the treated and untreated areas. The program is configured to automatically update the position of the implement based location data received from a positioning unit allowing the operator to continuously monitor his position on the field. A third GUI for section control of the spreaders or sprayers on the implement may be stored in the program allowing the operator to adjust the width of the treated area on wedges or the like. The program may be configured to automatically turn on and off individual sections of the "spray nozzles" or spreader system based on the received location data or to manually turn on or off these sections using one or more predefined touch-sensitive areas on the GUI. The third GUI may be configured to display these sections of the implement and indicate graphically the status of each section. The sections may be displayed on the third GUI as rectangular sections and/or circle sectors indicating the range of each section. A forth GUI for variable rate control of the implement may be stored in the program allowing the operator to optimise the amount of delivered substance to the field so that an even amount is delivered even in rugged terrain. The program may be configured to automatically adjust the flow rate and/or the speed of the rotating disks or pressure of the spray nozzles based on the location data and/or on topographical data stored in the program.

The configuration/layout of these GUIs preferably more or less matches the user panels found on the terminals today. The icons, menus and data displayed in the GUIs may also substantially match the icons, menus and data found on the terminals today. This allows an operator to quickly and easily familiarise himself with the new GUIs since they may be configured to function in more or less the same manner as the conventional user panels. The operator may switch between the GUIs using any known technique, e.g. swiping across the screen or activating an arrow or slidable bar on the screen. Predetermined functions for safety reasons, e.g. start/stop of the implement, may be found on all the GUIs. The use of an off-the-shelf tablet computer allows the costs for the farm to be significantly reduced since the same piece is used to manage all the applications. This allows the same computer to be used to control the implement as well as managing the spreading/spraying process unlike the solution in US 2012/0169504 A1. The invention further allows the planning and documentation to be carried out on the same computer, thus further simplifying the entire process since all the steps are carried out on the tablet computer.

According to one embodiment, the first connection is a wireless connection, such as a WiFi connection.

The tablet computer transmits and receives data from the communications module via a WiFi, Blutooth, IR, RF or another wireless connection. As the tablet computer is used to control the operation of the implement, the communications module may form a separate unit which can be placed at a discrete location in the cabin so that it does not obscure the view of the operator. The communications module may instead be integrated into the docking station. The first connection may be a wired connection instead, such as a RS 232, CAN BUS, USB, DIN or mini-DIN or another serial or parallel data connection.

According to one embodiment, the second connection is a wired connection, such as a serial data connection.

The communications module transmits and receives data from the electronic terminal via a wired connection, such as RS 232, CAN BUS, USB, DIN or mini-DIN or another serial or parallel connection. The electronic terminal may in turn be coupled to a weighing or control system located on the implement. A plurality of data ports in the form of plugs and/or sockets, e.g. two, three, four, five or more, allows more than one device to be coupled to the communications module. The plugs/sockets may have the same or different configurations. A local microprocessor unit may be configured to manage the data transmitted between the different plugs and sockets. The microprocessor unit may be configured to translate the data from one communications standard to another communications standard.

According to a special embodiment, the electronic terminal comprises mounting means for mounting to the implement or to the inside of a cabin of the drive unit, wherein the second connection is a wired connection, such as a CAN BUS connection.

The electronic terminal may be configured as a conventional terminal configured to be placed in the cabin of the tractor at a discrete location since the implement is controlled via the first GUI on the tablet computer. This allows the conventional user panel and display on such terminals to be omitted since the implement is controlled via the tablet computer. The electronic terminal may instead be configured as an ISOBUS controller configured to be placed on the implement. The communications module placed in the cabin may be coupled to the electronic terminal via the wired connection or a CAN BUS connection, e.g. via the tractors ISOBUS network. The second connection may alternatively be a wireless connection such as a WiFi, Bluetooth, IR or RF connection.

According to a special embodiment, the communications module is integrated into the electronic terminal.

This allows both devices to form a single unit which can be placed at a discrete location thereby reducing the number of terminals in the cabin. The communications module may instead be attached to the housing of the terminal and electronically coupled to the terminal. If the tablet computer is placed in a docking station, then the communications module may be coupled to or integrated into the docking station.

According to one embodiment, the communications module is configured to be electrically coupled to a positioning unit and/or a sensor unit configured to at least measure a reflected signal from a signal applied to the crops on the area.

The program may be configured to use the internal GPS module of the tablet computer for tracking the location of the implement. The location data may be used to manage the spraying or spreading at headlands or wedges and/or to turn the implement sections on or off and/or to regulate the flow rate or speed/pressure of the spreaders or spray nozzles. A second positioning unit, e.g. a DGPS, GNSS or SBAS receiver, may be coupled to the communications module via a wired or wireless connection for increased accuracy. The program may be configured to selectively switch between the two positioning units. Alternatively another GPS assisted terminal may be coupled to the communications module, e.g. via a CAN BUS connection, in which its intern GPS receiver may be used.

A sensor unit, e.g. a YARA sensor, located on the tractor or implement may be coupled to the communications module via a wired or wireless connection for regulating the amount for substance delivered to the field. The sensor unit may be a sensor configured to measure a reflected signal from a signal applied to the crops from an external source or intern source, e.g. a light source. Other types of sensor units may be coupled to the communications module. This allows the program to determine the concentrations of one or more substances, e.g. Nitrogen or another nutrient, in the crops and regulate the amount of delivered substance accordingly.

According to one embodiment, the positioning unit and/or the sensor unit is configured to be coupled directly to the tablet computer via a third connection.

The positioning unit and/or the sensor unit may communicate directly with the tablet computer instead of communicating with the tablet computer via the communications module. The third connection between the positioning unit and/or the sensor unit and the communications module or tablet computer may be wireless or wired connection depending on the configuration of the particular unit. The third connection may have the configuration as the first or second connection.

According to one embodiment, the program is configured to communicate with a remote server via a wireless Internet connection coupled to the tablet computer, and wherein the program comprises a third graphic user interface for inputting data to a spread chart and/or a forth graphic user interface for transmitting data to the remote server.

The tablet computer allows the operator to carry out the planning and subsequent documentation on the same computer which is used to control the implement. This eliminates the need for transferring the data to and from a second external computer using a USB-stick or the like. The spread charts may be located on a remote server with which the operator may communicate by using an integrated Internet module in the tablet computer or an Internet dongle coupled to the tablet computer. The Internet connection may be a GSM, UMTS, CDMA, LTE or another suitable Internet connection. A fifth GUI in the program may be configured to access the server and/or input data into the spread cheat. The documentation may be uploaded to the server via the fifth GUI or another sixth GUI.

The tablet computer allows the operator to use other functions normally found in a tablet computer, such as text editing tools, media players, calendars or other relevant tools. The operator may carry out a telephone conversation with another person, transmit and receive text messages, e.g. SMS/MMS, emails or IMs, or look up information on the Internet using the functionality of the tablet computer. The operator may also use to the tablet computer to navigate between fields or to the farm or other navigation purposes. The use of an off-the-shelf tablet computer allows the operator to carry out the daily routines more effectively and reduces the number of devices found in the cabin of the tractor which gives the operator a better view of the field.

The described embodiments of the system and the graphic user interfaces may be adapted to other types of implements, such as sprayers or salt spreader. The number of graphic user interfaces may be adapted to the specific type of implement and desired applications of that implement. This allows the graphic user interfaces to be updated and optimised according to the present environment requirements and the configuration/functionality of the selected implement.

Alternatively the executable program may be configured to run a mobile phone, such as a smart phone, a palmtop computer or another mobile communications device.

### Description of the Drawing

The invention is described by example only and with reference to the drawings, wherein:
- Fig. 1: shows a first exemplary embodiment of a system for controlling a mineral fertilizer spreader according to the invention;
- Fig. 2: shows a second exemplary embodiment of the system for controlling a mineral fertilizer spreader;
- Fig. 3: shows an exemplary embodiment of a graphic user interface for controlling the operation of a mineral fertilizer spreader; and
- Fig. 4: shows an exemplary embodiment of a graphic user interface for headland management.

In the following text, the figures will be described one by one and the different parts and positions seen in the figures will be numbered with the same numbers in the different figures. Not all parts and positions indicated in a specific figure will necessarily be discussed together with that figure.

### Detailed Description of the Invention

The term "treatment" is defined as spraying or spreading a liquid or solid substance over a desired area using an agricultural implement. The substance may be a fertilizer or mineral, pesticide, herbicide, lime, sand, salt, or another relevant substance which may be in a granulated, prilled, crushed or liquid form. The term "area" is defined as an agricultural field or a planar or paved surface for vehicles or pedestrians. The term "agricultural implement" is defined as any implement configured to spray a liquid substance over the desired area using one or more nozzles or to spread a solid substance over the desired area by means of at least one rotating disk or another relevant spreading system.

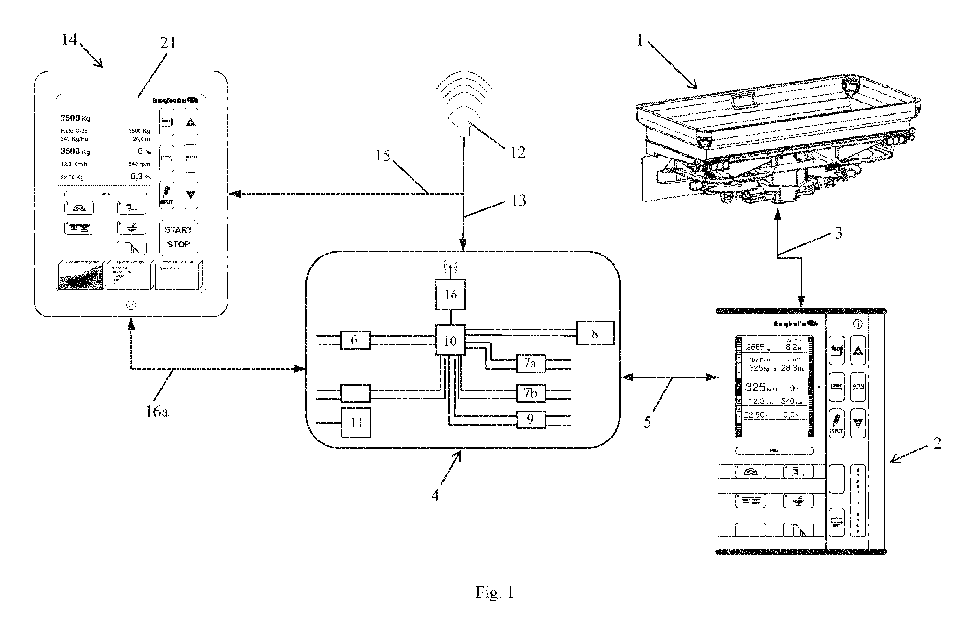

Fig. 1 shows a first exemplary embodiment of a system for controlling an agricultural implement 1 in the form of a mineral fertilizer spreader with coupling means (e.g. PTO shaft and a linkage) for mechanical coupling to a drive unit, e.g. a tractor. The implement 1 may comprise a weighing system (not shown) electronically coupled to an electronic terminal 2 via a wired connection 3, e.g. a serial data connection with a dedicated communications protocol. The configuration of the implement 1 will not be described further, as it is known, see e.g. the professional models from the applicant.

The electronic terminal 2 is configured to control the operation of the implement 1 based on one or more reference data inputted into the system. The electronic terminal 2 may receive one or more operational data from the weighing system and/or transmit one or more commands in the form of control signals to the weighing system. The implement 1 may be controlled in the same manner as a known implement, e.g. the professional models from the applicant, and will not be described in details.

A communications module 4 is electronically coupled to the electronic terminal 2 via a wired connection 5, e.g. a serial data connection. The communications module 4 comprises one or more data ports 6 in the form of plugs and/or sockets for coupling to the electronic terminal 2. One or more data ports 7, 8 in the form of plugs and/or sockets, such as a serial splitter 7a, 7b or a CAN BUS 8, may be arranged in the communications module 4 for coupling to another unit, such as a GPS assisted terminal and/or a sensor unit. A dedicated data port 9 in the form of a plug or socket may be arranged in the communications module 4 for coupling to a positioning unit. A microprocessor unit 10 is configured to manage the data transmissions between the different couplings means 6, 7, 8, 9 in the module 4. A power supply unit 11 drives the electronic circuitry in the communications module 4 and is powered by batteries or configured to be coupled to the power source in the drive unit.

The positioning unit 12 in the form of a SBAS unit is electronically coupled to the communications module 4, e.g. via a wired or wireless connection 13. The positioning unit 12 is configured to provide more accurate location data of the position of the implement 1. Alternatively, the positioning unit 12 may be electronically coupled directly to a tablet computer 14 via another wired or wireless connection 15, e.g. via Bluetooth.

The tablet computer 14 in the form of an off-the-shelf tablet computer is electronically coupled to a wireless unit 16 in the communications module 4 via a wireless connection 16a, e.g. a WiFi or Bluetooth connection. The tablet computer 14 is configured to transmit and/or receive data from the electronic terminal 2 via the communications module 4. An executable program configured to run on the operational system, e.g. iOS, Windows, or Android, is installed on the tablet computer 14. The program is configured to control the operation of the implement 1 and one or more applications associated with the implement 1, e.g. headland management, section control and/or section control, via one or more graphic user interfaces 17, 18.

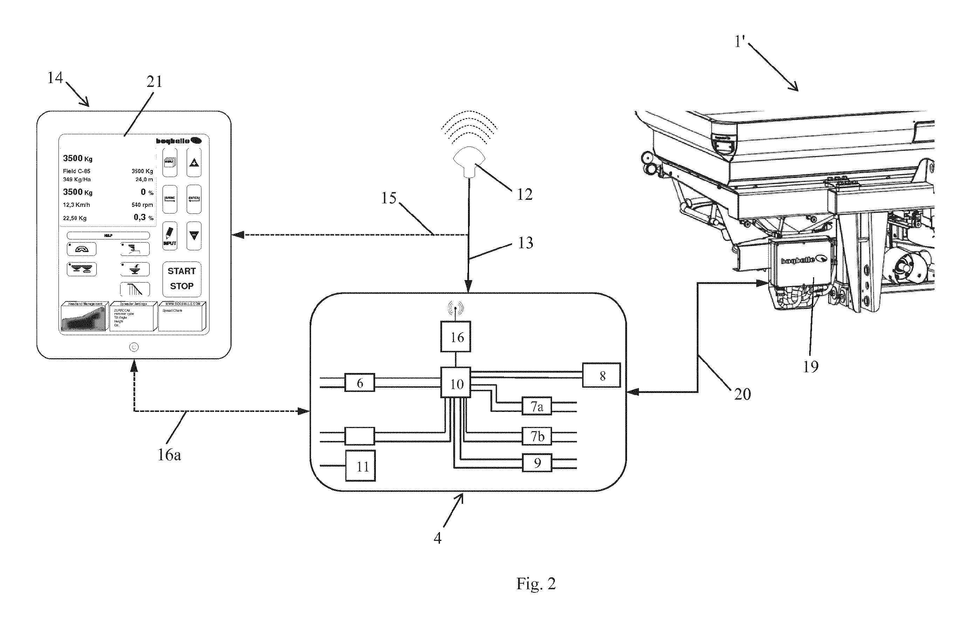

Fig. 2 shows a second exemplary embodiment of the system where the electronic terminal 19 is placed on the implement 1' instead of in a cabin of the drive unit, as shown in fig. 1. The weighing system may be electronically coupling to the electronic terminal 19, e.g. via a wired connection 20. The electronic terminal 19 is configured as an ISOBUS controller which is coupled to the communications module 4 via an ISOBUS connection or another serial data connection. The tablet computer 14 is configured to transmit and/or receive data from the ISOBUS controller 19 via the communications module 4.

The communications module 4 may be placed in the cabin for easy connection to the tablet computer 14, or placed on the implement 1, e.g. integrated into the ISOBUS controller 19.

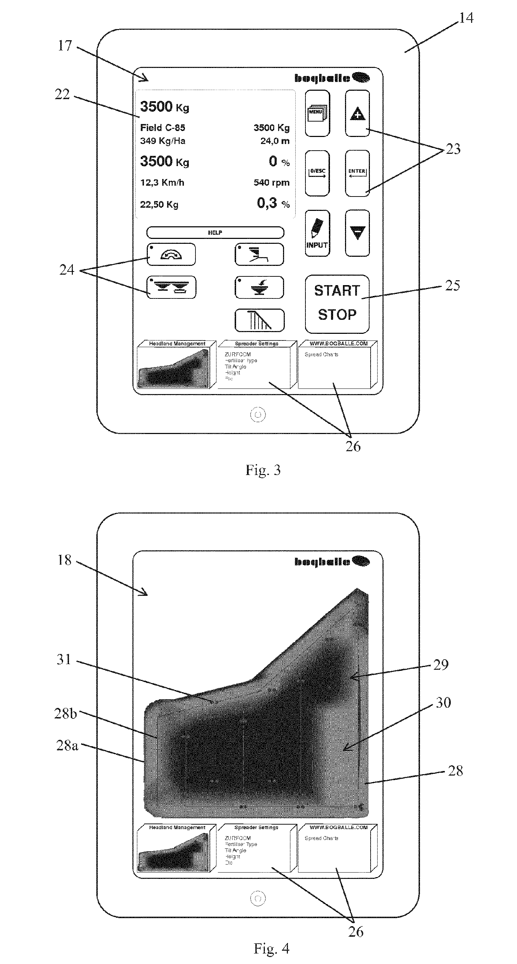

Fig. 3 shows an exemplary embodiment of a graphic user interface 17 for controlling the operation of the implement 1 which is stored in the program. The graphic user interface 17 is configured to be displayed on the touch-sensitive screen 21 of the tablet computer 14.

The graphic user interface 17 comprises a display area 22 for displaying the operational data of the implement 1 and/or one or more predetermined areas 23, 24 in the form of touch-sensitive buttons for selecting or activating a predetermined function. One or more areas 23 are dedicated for inputting the reference data into the program which is used to control the operation of the implement 1 and/or adjusting the settings of the program. One or more areas 24 are dedicated for activating a desired application or mode of the implement 1, e.g. headland management, section control, and/or variable rate control. The areas 24 may also be configured to visually display which application or mode is currently activated.

One or more areas 25 are dedicated to activate or deactivate a predetermined function, e.g. safety by turning the implement 1 on or off. This area 25 may be common for all the different graphic user interfaces 17, 18.

A predetermined area 26 is arranged on the graphic user interfaces 17, 18 for selecting or switching between the graphic user interfaces 17, 18 by scrolling or swiping through the icons representing the different graphic user interfaces 17, 18 and/or activating the selected icon for viewing the selected graphic user interface.

Fig. 4 shows an exemplary embodiment of a graphic user interface 18 for particular application, e.g. headland management. The graphic user interface 17 is configured to be displayed on the touch-sensitive screen 21 of the tablet computer 14.

A predetermined area 27 is configured to display the selected field 28, e.g. the boundaries 28a of the fields and/or the tramlines 28b of the field. The area may be configured to graphically display the field 28 and/or the tramlines 28b in any known manner, e.g. by using lines and/or different colours.

The area 27 may be configured to graphically display the untreated areas 29 and the treated areas 30 of the field, e.g. by hatching, different colours or contrasts or another technique. The program may be configured to continuously update the graphic user interface 18 based on the received location data, e.g. from the positioning unit 12. The area 27 may further be configured to display other relevant data relating to the headland management, e.g. points 31 for activating or deactivating the spreading means on the implement 1 or overlapping areas of the treated areas 30.

The configuration and function of the icons and/or the icons displayed on the graphic user interfaces 17, 18 may substantially match the configuration and icons of a user panel on a known terminal, e.g. the electronic terminal 4 as shown in fig. 1. The operator is then able to quickly and easily familiarise himself with the use of the program executed on the tablet computer.

## Claims

1. A system for controlling the operation of an agricultural implement, such as a mineral fertilizer spreader, comprising:
- an agricultural implement comprising mechanical coupling means for coupling to a drive unit, such as a tractor, a container for receiving and storing a substance for treatment of an area, and means for distributing the substance on to the area when the agricultural implement is activated;
- an electronic terminal configured to be electronically coupled to the implement, wherein the electronic terminal is configured to control the operation of the implement
**characterised in that**
- an executable program is configured to be loaded onto a tablet computer which is configured to execute the program, where the tablet computer is configured to be electronically coupled to a communications module via a first connection, which communications module in turn is configured to be electrically coupled to the electronic terminal via a second connection,
- wherein the operation of the implement is controlled via at least one graphic user interface of the program, wherein the graphic user interface is configured to run on the tablet computer.

2. A system according to claim 1, wherein the program comprises at least another graphic user interface for managing a predetermined application, such as headland management, section control and/or variable rate control, when operating the implement.

3. A system according to claim 1 or 2, wherein the first connection is a wireless connection, such as a WiFi connection.

4. A system according to any one of claims 1 to 3, wherein the second connection is a wired connection, such as a serial data connection.

5. A system according to claim 3 or 4, wherein the electronic terminal comprises mounting means for mounting to the implement or to the inside of a cabin of the drive unit, wherein the second connection is a wired connection, such as a CAN BUS connection.

6. A system according to any one of claims 1 to 5, wherein the communications module is integrated into the electronic terminal.

7. A system according to any one of claims 2 to 6, wherein the communications module is configured to be electrically coupled to a positioning unit and/or a sensor unit configured to at least measure a reflected signal from a signal applied to the crops on the area.

8. A system according to claim 7, wherein the positioning unit and/or the sensor unit is configured to be coupled directly to the tablet computer via a third connection.

9. A system according to any one of claims 1 to 8, wherein the program is configured to communicate with a remote server via a wireless Internet connection coupled to the tablet computer, and wherein the program comprises a third graphic user interface for inputting data to a spread chart and/or a forth graphic user interface for transmitting data to the remote server.
